# EUROPÄISCHE PATENTSCHRIFT

(11) **EP 2 125 328 B1**
(45) Veröffentlichungstag und Bekanntmachung des Hinweises auf die Patenterteilung: **21.11.2012**
(21) Anmeldenummer: 07847673.6
(22) Anmeldetag: 03.12.2007
(51) Int. Cl.: B29C 47/88, B29C 35/04, B29C 35/06

(54) **Verfahren und Vorrichtung zur Herstellung eines strangförmigen Extrudates**
Process and apparatus for producing a strand-like extrudate
Procédé et dispositif de fabrication d'un produit extrudé en barre

(30) Priorität: 19.12.2006 DE 102006059932
(43) Veröffentlichungstag der Anmeldung: 02.12.2009
(73) Patentinhaber: Robert Bosch GmbH, 70442 Stuttgart (DE)
(72) Erfinder: LAY, Reiner, 52072 Achen (DE); WYNEN, Paul, 3910 Neerpelt (BE)
(86) Internationale Anmeldenummer: PCT/EP2007/063162
(87) Internationale Veröffentlichungsnummer: WO 2008/074622

(56) Entgegenhaltungen:
- EP-A- 0 020 853
- FR-A- 1 584 391
- GB-A- 1 148 520
- GB-A- 1 337 802
- JP-A- 58 145 433

## Beschreibung

### Stand der Technik

Die Erfindung betrifft ein Verfahren zur Herstellung eines strangförmigen Extrudates gemäß dem Oberbegriff des Anspruchs 1. Weiterhin betrifft die Entfernung eine Vorrichtung zur Herstellung eines strangförmigen Extrudates gemäß dem Oberbegriff des Anspruchs 5.

Strangförmige Extrudate aus einem Gummimaterial werden zum Beispiel zur Herstellung von Wischgummis, insbesondere von Wischgummis für Scheibenwischer von Kraftfahrzeugen, verwendet. Das Gummimaterial für das strangförmige Extrudat ist üblicherweise ein teilvernetztes Elastomer. Dieses wird bei der Herstellung einer Vulkanisation unterzogen. Üblicherweise wird die Vulkanisation nach der Extrusion des strangförmigen Extrudates durchgeführt. Hierzu wird das strangförmige Extrudat nach Verlassen des Extruders auf die Vulkanisationstemperatur erwärmt. Dies erfolgt zum Beispiel in einem Bad, welches eine Salzschmelze enthält.

Die Salzschmelze ist üblicherweise in einem Kanal aufgenommen, durch welchen das Extrudat in horizontaler Richtung hindurchgeführt wird. Um ein Reißen des Extrudates zu vermeiden, befindet sich dieses üblicherweise auf einer Transportvorrichtung, die im Allgemeinen in Form eines Transportbandes gestaltet ist. Nachteil der Verwendung eines Transportbandes ist, dass dieses zum Verkleben mit dem Profil des strangförmigen Extrudates neigt und Deformationen verursacht.

Ein weiterer Nachteil des aus dem Stand der Technik bekannten Bades ist, dass dieses üblicherweise nach oben offen ist. Aufgrund des horizontalen Transportes des Extrudates durch das Bad ist die freie Oberfläche sehr groß. Hierdurch ist es nur unter einem sehr großen Aufwand möglich, Emissionen aus dem Salzbad an die umgebende Luft abzusaugen.

Die Herstellung von Wischblättern durch Extrusion und anschließende Vulkanisierung ist zum Beispiel in DE-A 10 2005 000 851 und JP 58 145 433 beschrieben.

### Offenbarung der Erfindung

### Vorteile der Erfindung

Bei dem erfindungsgemäßen Verfahren nach Anspruch 1 zur Herstellung eines strangförmigen Extrudates aus einem Gummimaterial, welches nach dem Extrudieren vulkanisiert wird, erfolgt die Vulkansierung in einem Bad mit darin enthaltenem Temperiermedium. Das strangförmigen Extrudat wird in im Wesentlichen vertikaler Richtung durch das Temperiermedium bewegt.

"In im Wesentlichen vertikaler Richtung" im Sinne der vorliegenden Erfindung umfasst auch eine Abweichung von der Vertikalen, das heißt der Richtung parallel zur Wirkungsrichtung der Schwerkraft, von bis zu 5°.

Dadurch, dass das strangförmige Extrudat in im Wesentlichen vertikaler Richtung durch das Temperiermedium bewegt wird, wird dieses nicht durch die Schwerkraft deformiert. Vorteil hiervon ist, dass dadurch Profilgeometrien mit sehr geringen Wandstärken möglich sind.

Ein weiterer Vorteil der im Wesentlichen vertikalen Durchführung durch das Bad mit dem Temperiermedium ist, dass am Ende des Vulkanisationsvorganges das Temperiermedium entlang dem strangförmigen Extrudat in das Bad zurückfließt. Hierdurch werden Verluste an Temperiermedium minimiert.

In einer bevorzugten Ausführungsform wird das strangförmige Extrudat frei schwimmend durch das Bad mit dem darin enthaltenen Temperiermedium gefördert. Das bedeutet, dass auf ein Transportmittel, zum Beispiel ein Transportband, wie es aus dem Stand der Technik bekannt ist, verzichtet werden kann. Das strangförmige Extrudat kann somit nicht mehr mit dem Transportmittel verkleben und hierdurch deformieren.

Vorzugsweise erfolgt der Transport des strangförmigen Extrudates durch das Temperiermedium von unten nach oben. Somit herrscht am Eintritt in das Bad aufgrund des hydrostatischen Drucks des Temperiermediums der höchste Druck. Dieser beträgt bei einer Höhe des Bades von 7 bis 10 m bis zu 2 bar. Die Vulkanisation findet somit zunächst unter diesem Druck statt. Hierdurch werden Porositäten des strangförmigen Extrudates vermindert und gegebenenfalls verhindert.

Die erfindungsgemäße Vorrichtung nach Anspruch 4 zur Durchführung des vorstehend beschriebenen Verfahrens umfasst mindestens ein Bad mit darin enthaltenem Temperiermedium, wobei das Bad vorzugsweise in Form eines geschlossenen Kanals mit Öffnungen für die Zufuhr und Abfuhr des strangförmigen Extrudates ausgebildet ist, der derart angeordnet ist, dass das strangförmige Extrudat in im Wesentlichen vertikaler Richtung durch diesen hindurchgeführt werden kann.

Aufgrund der vertikalen Durchführung des strangförmigen Extrudates ist es möglich, das Bad mit einem kleinen Querschnitt und einer großen Länge zu bilden. Lediglich der kleine Querschnitt an der Oberseite kann zur Umgebung hin offen sein. Vorteil dieser Gestaltung ist, dass die offene Oberfläche des Temperiermediums sehr klein ist, wodurch Emissionen an die umgebende Luft räumlich sehr begrenzt sind und damit leicht abgesaugt werden können.

In einer bevorzugten Ausführungsform ist das Bad mit dem darin enthaltenen Temperiermedium beheizbar. Alternativ oder zusätzlich zur Beheizung ist es bevorzugt, dass das Bad mit dem darin enthaltenen Temperiermedium zur Umgebung hin thermisch isoliert ist.

Aufgrund des kleinen Querschnitts im Vergleich zur Länge des Bades und der nur kleinen freien Oberfläche zur offenen Umgebung hin wird durch das Bad nur eine geringe Menge an Wärme an die Umgebung abgegeben. Es ist weniger Energie notwendig, um das Temperiermedium auf der erforderlichen Temperatur zu halten. Durch die thermische Isolierung lässt sich die Wärmeabgabe an die Umgebung weiter reduzieren. Somit kann das erfindungsgemäß ausgebildete Bad sehr kostensparend beheizt werden.

Gemäß einer weiteren Ausführungsform der vorliegenden Erfindung ist es möglich, dass im Bad mit dem darin enthaltenen Temperiermedium mindestens eine Umlenkrolle aufgenommen ist, um die das strangförmige Extrudat umgelenkt wird. Durch das Umlenken des Extrudates ist es möglich, die Länge des Bades bei gleichbleibender Verweildauer des strangförmigen Extrudates im Temperiermedium zu verringern. Das strangförmige Extrudat wird bei dieser Ausführungsform zunächst in vertikaler Richtung in Schwerkraftrichtung durch das Bad transportiert, um die Umlenkrolle geführt und anschließend ebenfalls in vertikaler Richtung entgegen der Schwerkraftrichtung bis zur Entnahme aus dem Bad gefördert. Alternativ ist es auch möglich, das strangförmige Extrudat zunächst in im Wesentlichen vertikaler Richtung entgegen der Schwerkraftrichtung, dann um die Umlenkrolle und abschließend in im Wesentlichen vertikaler Richtung in Schwerkraftrichtung durch das Temperiermedium zu führen.

Um die für die Vulkanisation erforderliche Verweilzeit im Temperiermedium zu erzielen, weist das Bad vorzugsweise eine Höhe im Bereich von 5 bis 18 m, insbesondere im Bereich von 7 bis 10 m auf.

Um die für die Vulkanisation erforderliche Temperatur zu erzielen, ist das Temperiermedium im Bad vorzugsweise eine Salzschmelze. Die Temperatur liegt vorzugsweise im Bereich von 160 bis 240°C.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine erfindungsgemäß ausgebildete Vorrichtung in einer ersten Ausführungsform,
- Figur 2: eine erfindungsgemäß ausgebildete Vorrichtung in einer zweiten Ausführungsform.

### Ausführungsformen der Erfindung

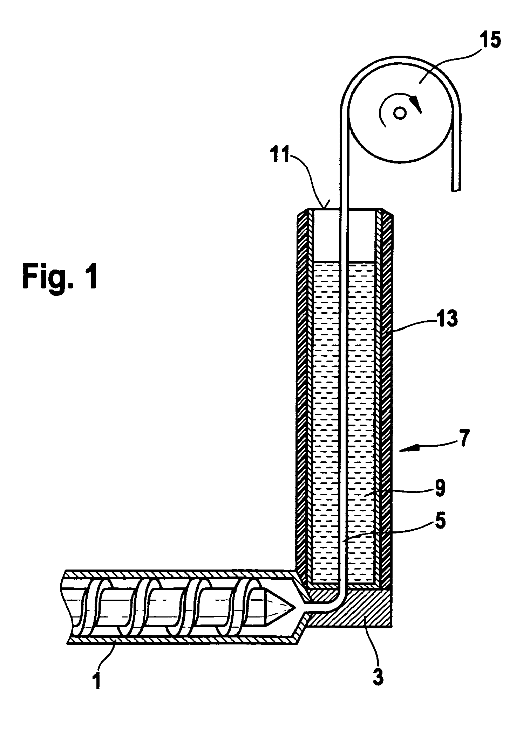

In Figur 1 ist eine erfindungsgemäß ausgebildete Vorrichtung in einer ersten Ausführungsform dargestellt.

Eine erfindungsgemäß ausgebildete Vorrichtung umfasst einen Extruder 1, der hier nur schematisch dargestellt ist. Extruder 1 sind übliche Maschinen in der Polymerverarbeitung und dem Fachmann bekannt.

Im Extruder 1 wird eine Polymermischung plastifiziert und durch ein Werkzeug 3 in ein strangförmiges Extrudat 5 geformt. Das strangförmige Extrudat 5 ist üblicherweise ein Endlosstrang.

Erfindungsgemäß ist das Polymermaterial, welches im Extruder 1 plastifiziert wird, ein Gummimaterial. Derartige Gummimaterialien sind zum Beispiel Naturkautschuk oder synthetische Kautschuksorten wie Chloroprenkautschuk oder EPDM. Weiterhin eignet sich als Gummimaterial auch Silikonkautschuk oder Polyurethankautschuk. Das Gummimaterial kann weiterhin ein Copolymer aus Isopren und/oder mindestens ein weiteres polymerisierbares Monomer enthalten.

Das Werkzeug 3, durch welches das plastifizierte Gummimaterial gepresst wird, ist üblicherweise eine Düse, die einen Querschnitt aufweist, der den Querschnitt des herzustellenden strangförmigen Extrudates 5 entspricht. Durch die Extrusion kann ein strangförmiges Extrudat 5 mit jedem beliebigen gewünschten Querschnitt erzeugt werden.

Nach der Extrusion wird das strangförmige Extrudat 5 einem Bad 7 zugeführt, in dem ein Temperiermedium 9 enthalten ist. Das Temperiermedium 9 ist vorzugsweise eine Salzschmelze. Geeignete Salze für die Salzschmelze sind zum Beispiel Gemische aus Lithiumnitrat und Kaliumnitrat oder auch Gemische aus Kaliumnitrat, Natriumnitrat und Natriumnitrit.

Erfindungsgemäß ist das Bad 7 so gestaltet, dass das strangförmige Extrudat 5 in im Wesentlichen vertikaler Richtung durch dieses hindurchgeführt wird. Gemäß der in Figur 1 dargestellten Ausführungsform wird das strangförmige Extrudat 5 dem Bad 7 unten zugegeben und entgegen der Schwerkraftrichtung nach oben transportiert. Das Bad 7 ist dabei zum Beispiel in Form eines Rohres ausgeführt. Dieses ist an seiner Oberseite, an der das strangförmige Extrudat 5 entnommen wird, offen. Da das strangförmige Extrudat 5 in vertikaler Richtung durch das Bad 7 hindurchgeführt wird, ist es möglich, das Bad 7 mit einem kleinen Durchmesser auszuführen. Hierdurch ist der Querschnitt des Bades 7 im Vergleich zu seiner Länge klein. Dies führt zu einer kleinen freien Oberfläche gegenüber der Umgebung, an der Emissionen an die Umgebung abgegeben werden können. Aufgrund des kleinen Querschnitts der offenen Oberfläche 11 des Bades 7 ist es möglich, die Emissionen leicht abzusaugen. Es ist nicht erforderlich, wie bei den aus dem Stand der Technik bekannten in horizontale Richtung ausgerichteten Bädern eine Absaugvorrichtung vorzusehen, die sich über die gesamte Länge des Bades erstreckt. Zudem sind die Emissionen an die Umgebung sehr viel kleiner.

Das strangförmige Extrudat 5 wird vorzugsweise ebenfalls in im Wesentlichen vertikaler Richtung dem Temperiermedium 9 entnommen. Vorteil hiervon ist, dass das Temperiermedium 9 entlang des strangförmigen Extrudates 5 in das Bad 7 zurückläuft. Der Verlust an Temperiermedium 9 wird somit minimiert.

Da das strangförmige Extrudat in vertikaler Richtung durch das Temperiermedium 9 im Bad 7 geführt wird, ist es nicht erforderlich, innerhalb des Bades 7 ein Transportmittel, mit welchem das strangförmige Extrudat gefördert wird, vorzusehen. Das strangförmige Extrudat 5 schwimmt frei im Temperiermedium 9. Auf diese Weise wird vermieden, dass das strangförmige Extrudat 5 mit einem Transportmittel verkleben kann, wodurch Deformationen entstehen können. Aufgrund der Bewegungsrichtung entgegen der Schwerkraftrichtung wird weiterhin vermieden, dass Deformationen des strangförmigen Extrudates auftreten, die auf einen quer zur Transportrichtung des strangförmigen Extrudates 5 wirkenden Schwerkrafteinfluss zurückzuführen sind.

Die Verweilzeit des strangförmigen Extrudates 5 im Temperiermedium 9 ergibt sich aus der Fördergeschwindigkeit des strangförmigen Extrudates 5 und der Höhe des Bades 7.

Bei den aus dem Stand der Technik bekannten Extrusionsgeschwindigkeiten und benötigten Vulkanisationszeiten ergibt sich eine Höhe des Bades 7 im Bereich von 5 bis 18 m, bevorzugt im Bereich von 7 bis 10 m.

Aufgrund der Höhe des Bades 7 mit dem darin enthaltenen Temperiermedium 9 stellt sich im Bad 7 ein hydrostatischer Druck ein, der am Eintritt des strangförmigen Extrudates 5 in das Bad 7 im Bereich von ca. 2 bar liegt. Aufgrund dieses Drucks wird ein Ausbilden von Porositäten im strangförmigen Extrudat vermieden.

Um Wärmeverluste an die Umgebung zu vermeiden, ist das Bad 7 vorzugsweise mit einer Außenisolation 13 versehen. Als Material für die Außenisolierung 13 eignet sich jedes, dem Fachmann bekannte Material, welches zur thermischen Isolierung eingesetzt werden kann. Bei der Auswahl des Materials für die Außenisolierung 13 ist lediglich darauf zu achten, dass dieses gegenüber den Temperaturen, die an der Außenfläche des Bades 7 auftreten, stabil ist.

Um das strangförmige Extrudat 5 durch das Bad 7 hindurchzufördern, ist zum Beispiel eine Transportrolle 15 vorgesehen, um welche das strangförmige Extrudat 5 geführt ist. Die Transportrolle 15 ist vorzugsweise angetrieben. Dabei entspricht die Umfangsgeschwindigkeit der Transportrolle 15 der Geschwindigkeit, mit der das strangförmige Extrudat 5 durch das Temperiermedium 9 im Bad 7 gefördert werden muss, um ein gleichmäßiges Profil zu erzielen. Neben einer einzelnen Transportrolle 15, wie sie in Figur 1 dargestellt ist, ist es selbstverständlich auch möglich, eine Kombination aus mehreren Rollen vorzusehen. Hierbei ist es möglich, dass entweder alle Rollen angetrieben sind oder dass nur einzelne der Rollen angetrieben sind. Die Rollen können sich dabei zum Beispiel gegenüberliegen, so dass das strangförmige Extrudat 5 jeweils zwischen zwei oder mehreren Rollen hindurchgeführt wird, sie können auch abwechselnd angeordnet sein, so dass das strangförmige Extrudat 5 mäanderförmig um die Transportrollen 15 herumgeführt wird. Weiterhin sind auch Kombinationen von nebeneinander und gegenüber liegenden Rollen denkbar.

An die im Bad 7 durchgeführte Vulkanisation können sich weitere Verarbeitungsschritte für das strangförmige Extrudat 5 anschließen. So ist es zum Beispiel möglich, dass das strangförmige Extrudat 5 in einem weiteren Verarbeitungsschritt beschichtet wird.

Der Extruder 1 und das Bad 7 sind vorzugsweise so angeordnet, dass das strangförmige Extrudat 5 direkt aus dem Werkzeug 3 in das Bad 7 eingespritzt wird. Auf diese Weise ist es nicht erforderlich, am Bad 7 eine Zufuhrvorrichtung vorzusehen, welche das eintretende strangförmige Extrudat 5 so abdichtet, dass kein Temperiermedium 9 aus dem Bad 7 ablaufen kann. Da der Druck am Werkzeug 3 des Extruders 1 üblicherweise den hydrostatischen Druck des Temperiermediums 9 im Bad 7 übersteigt, wird auch dann kein Temperiermedium 9 in den Extruder 1 strömen, wenn das Bad 7 sich unmittelbar an das Werkzeug 3 anschließt.

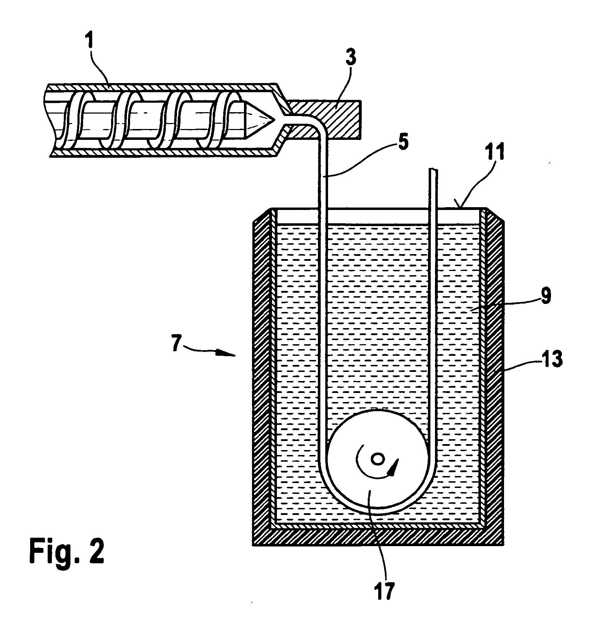

In Figur 2 ist eine erfindungsgemäß ausgebildete Vorrichtung in einer zweiten Ausführungsform dargestellt.

Bei der in Figur 2 dargestellten Ausführungsform wird das plastifizierte Gummimaterial als strangförmiges Extrudat 5 durch das Werkzeug 3 aus dem Extruder 1 herausgepresst. Das strangförmige Extrudat 5 bewegt sich zunächst in vertikaler Richtung in Schwerkraftrichtung in das Temperiermedium 9 im Bad 7 zur Vulkanisation. Im Bad 7 ist eine Umlenkrolle 17 aufgenommen, um welche das strangförmige Extrudat 5 herumgeführt ist. Nach dem Passieren der Umlenkrolle 17 wird das strangförmige Extrudat in im Wesentlichen vertikaler Richtung entgegen der Schwerkraftrichtung weiter durch das Bad 7 gefördert, bis es wiederum die offene Oberfläche 11 erreicht. Hier tritt das strangförmige Extrudat 5 aus dem Temperiermedium 9 aus. Der Transport des strangförmigen Extrudates 5 durch das Temperiermedium 9 erfolgt hierbei üblicherweise mit einer Transportvorrichtung, die jedoch in Figur 2 nicht dargestellt ist. Die Transportvorrichtung kann zum Beispiel eine Transportrolle 15 sein, über die das strangförmige Extrudat 5 geführt wird, nachdem dieses das Bad 7 verlassen hat.

Vorteil der in Figur 2 dargestellten Ausführungsform gegenüber der in Figur 1 dargestellten Ausführungsform ist, dass das Bad 7 bei gleicher Geschwindigkeit des strangförmigen Extrudates und gleicher Verweilzeit lediglich die halbe Höhe aufweisen muss. Jedoch nimmt durch die Zufuhr des strangförmigen Extrudates 5 über die offene Oberfläche 11 des Temperiermediums 9 zunächst der auf das strangförmige Extrudat 5 wirkende Druck zu und anschließend wieder ab. Das strangförmige Extrudat 5 wird nicht bei dem höchsten Druck im Temperiermedium 9 zugeführt.

Auch bei der in Figur 2 dargestelltcn Ausführungsform ist die offene Oberfläche 11 im Vergleich zur Höhe des Bades 7 klein. Somit sind auch hier die Emissionen im Vergleich zu einem in horizontale Richtung verlaufenden Bad klein und lassen sich leicht absaugen.

Alternativ zu der hier dargestellten Ausführungsform, bei der das strangförmige Extrudat zunächst um eine Umlenkrolle läuft und über die offene Oberfläche 11 des Bades 7 abgezogen wird, ist es auch möglich, dass das strangförmige Extrudat 5 über eine Auslassvorrichtung nach unten aus dem Bad 7 entnommen wird. Die Auslassvorrichtung muss dann jedoch so ausgeführt sein, dass kein Temperiermedium 9 aus dem Bad 7 ausströmen kann. Somit ist es erforderlich, das strangförmige Extrudat 5 an der Entnahmevorrichtung abzudichten. Demgegenüber ist es ein Vorteil der Ausführungsform mit Umlenkrolle 17, dass das strangförmige Extrudat 5 nach oben entnommen wird und gegebenenfalls am strangförmigen Extrudat 5 mitgerissenes Temperiermedium 9 in das Bad 7 zurückläuft.

Die Beheizung des Temperiermediums 9 kann sowohl bei der in Figur 1 dargestellten Ausführungsform als auch bei der in Figur 2 dargestellten Ausführungsform über die Oberfläche des Bades 7 erfolgen. Hierzu ist zum Beispiel eine Beheizung anstelle der Außenisolierung 13 vorgesehen. Weiterhin ist es auch möglich, dass die Beheizung zwischen der Außenisolierung 13 und der Wandung des Bades 7 aufgenommen ist. Alternativ dazu ist es selbstverständlich auch möglich, dass die Beheizung für das Temperiermedium 9 im Bad 7 vorgesehen ist. In einer weiteren alternativen Ausführungsform wird das Temperiermedium 9 umgepumpt, das heißt über eine Temperiermediumsentnahme dem Bad 7 entnommen und über eine Temperiermediumszufuhr dem Bad 7 zugeführt, wobei die Temperierung des Temperiermediums 9 außerhalb des Bades zum Beispiel durch einen Wärmetauscher erfolgt. Das Temperiermedium 9 ist, wie bereits oben erwähnt, vorzugsweise eine Salzschmelze.

## Patentansprüche

1. Herstellungsverfahren eines Wischgummis für Scheibenwischer als strangförmigem Extrudat (5) aus einem Gummimaterial, welches nach dem Extrudieren vulkanisiert wird, wobei die Vulkanisierung in einem Bad (7) mit darin enthaltenem Temperiermedium (9) erfolgt, **dadurch gekennzeichnet, dass** das Wischgummi für Scheibenwischer eines Kraftfahrzeugs in im wesentlichen vertikaler Richtung durch das Temperiermedium (9) bewegt wird.

2. Verfahren gemäß Anspruch 1, **dadurch gekennzeichnet, dass** das strangförmige Extrudat (5) frei schwimmend durch das Bad (7) mit dem darin enthaltenen Temperiermedium (9) gefördert wird.

3. Verfahren nach Anspruch 1 oder 2, **dadurch gekennzeichnet, dass** der Transport des strangförmigen Extrudates (5) durch das Bad (7) mit dem darin enthaltenen Temperiermedium (9) von unten nach oben erfolgt.

4. Vorrichtung zur Durchführung des Verfahrens nach einem der Ansprüche 1 bis 3, mindestens ein Bad (7) mit darin enthaltenem Temperiermedium (9) umfassend, **dadurch gekennzeichnet, dass** das Bad (7) in Form eines geschlossenen Kanals mit Öffnungen für die Zufuhr und Abfuhr eines Wischgummis für Scheibenwischer eines Kraftfahrzeugs ausgebildet ist, der derart angeordnet ist, dass das Wischgummi für Scheibenwischer eines Kraftfahrzeugs in im wesentlichen vertikaler Richtung durch diesen durchgeführt wird.

5. Vorrichtung nach Anspruch 4, **dadurch gekennzeichnet, dass** sich das Bad (7) mit dem darin enthaltenen Temperiermedium (9) direkt an ein Werkzeug (3) eines Extruders (1) anschließt, so dass das strangförmige Extrudat (5) direkt in das Temperiermedium (9) extrudiert wird.

6. Vorrichtung nach Anspruch 4, **dadurch gekennzeichnet, dass** das strangförmige Extrudat (5) dem Temperiermedium (9) über eine zur Umgebung hin offene Oberfläche (11) zugeführt und wieder entnommen wird.

7. Vorrichtung nach einem der Ansprüche 4 bis 6 **dadurch gekennzeichnet, dass** das Bad (7) mit dem darin enthaltenem Temperiermedium (9) beheizbar ist.

8. Vorrichtung nach einem der Ansprüche 4 bis 7, **dadurch gekennzeichnet, dass** das Bad (7) mit dem darin enthaltenen Temperiermedium (9) zur Umgebung hin thermisch isoliert ist.

9. Vorrichtung nach einem der Ansprüche 4 bis 8, **dadurch gekennzeichnet, dass** im Bad (7) mit dem darin enthaltenen Temperiermedium (9) mindestens eine Umlenkrolle (17) aufgenommen ist, um die das strangförmige Extrudat (5) umgelenkt wird.

10. Vorrichtung nach einem der Ansprüche 4 bis 7, **dadurch gekennzeichnet, dass** das Bad (7) mit dem darin enthaltenen Temperiermedium (9) eine Höhe im Bereich von 5 bis 18 m aufweist.

11. Vorrichtung nach einem der Ansprüche 4 bis 8, **dadurch gekennzeichnet, dass** das Temperiermedium (9) eine Salzschmelze ist.

## Claims

1. Production process for a wiper rubber for windscreen wipers in the form of strand-shaped extrudate (5) made of a rubber material which is vulcanized after the extrusion process, where the vulcanization process takes place in a bath (7) with temperature-control medium (9) present therein, **characterized in that** the wiper rubber for windscreen wipers of a motor vehicle is moved by way of the temperature-control medium (9) in a direction that is in essence vertical.

2. Process according to Claim 1, **characterized in that** the strand-shaped extrudate (5) is conveyed in freely suspended form through the bath (7) with the temperature-control medium (9) present therein.

3. Process according to Claim 1 or 2, **characterized in that** the strand-shaped extrudate (5) is transported upwards through the bath (7) with the temperature-control medium (9) present therein.

4. Apparatus for carrying out the process according to any of Claims 1 to 3, comprising at least one bath (7) with temperature-control medium (9) present therein, **characterized in that** the bath (7) takes the form of a closed duct with apertures for the input and take-off of a wiper rubber for windscreen wipers of a motor vehicle, where the arrangement of the duct is such that the wiper rubber for windscreen wipers of a motor vehicle is passed by way of the same in a direction that is in essence vertical.

5. Apparatus according to Claim 4, **characterized in that** the bath (7) with the temperature-control medium (9) present therein directly follows a die (3) of an extruder (1), in such a way that the strand-shaped extrudate (5) is extruded directly into the temperature-control medium (9).

6. Apparatus according to Claim 4, **characterized in that** the introduction of the strand-shaped extrudate (5) into the temperature-control medium (9), and, in turn, its removal therefrom, take place by way of a surface (11) that is open to the environment.

7. Apparatus according to any of Claims 4 to 6, **characterized in that** the bath (7) with the temperature-control medium (9) present therein is heatable.

8. Apparatus according to any of Claims 4 to 7, **characterized in that** the bath (7) with the temperature-control medium (9) present therein has thermal insulation from the environment.

9. Apparatus according to any of Claims 4 to 8, **characterized in that**, in order that the strand-shaped extrudate (5) is deflected, at least one deflector roller (17) has been placed in the bath (7) with the temperature-control medium (9) present therein.

10. Apparatus according to any of Claims 4 to 7, **characterized in that** the height of the bath (7) with the temperature-control medium (9) present therein is in the range from 5 to 18 m.

11. Apparatus according to any of Claims 4 to 8, **characterized in that** the temperature-control medium (9) is a molten salt.

## Revendications

1. Procédé de fabrication d'un caoutchouc de balai d'essuie-glace sous la forme d'un produit extrudé (5) en barre de matériau de caoutchouc qui est vulcanisé après l'extrusion, la vulcanisation ayant lieu dans un bain (7) qui contient un fluide (9) de traitement thermique,
**caractérisé en ce que**
le caoutchouc de balai d'essuie-glace de véhicule automobile est déplacé essentiellement dans la direction verticale à travers le fluide (9) de traitement thermique.

2. Procédé selon la revendication 1, **caractérisé en ce que** le produit extrudé (5) en forme de barre est transporté dans le bain (7) qui contient le fluide (9) de traitement thermique en y flottant librement.

3. Procédé selon les revendications 1 ou 2, **caractérisé en ce que** le transport du produit (5) extrudé en forme de barre dans le bain (7) qui contient le fluide (9) de traitement thermique s'effectue du bas vers le haut.

4. Dispositif en vue de l'exécution du procédé selon l'une des revendications 1 à 3, et présentant au moins un bain (7) qui contient un fluide (9) de traitement thermique,
**caractérisé en ce que**
le bain (7) est configuré sous la forme d'un canal fermé doté d'ouvertures d'amenée et d'extraction de caoutchouc pour balai d'essuie-glace de véhicule automobile, le canal étant disposé de telle sorte que le caoutchouc de balai d'essuie-glace de véhicule automobile soit guidé dans le bain essentiellement dans la direction verticale.

5. Dispositif selon la revendication 4, **caractérisé en ce que** le bain (7) qui contient le fluide (9) de traitement thermique suit directement un outil (3) d'une extrudeuse (1) de telle sorte que le produit extrudé (5) en forme de barre soit extrudé directement dans le fluide (9) de traitement thermique.

6. Dispositif selon la revendication 4, **caractérisé en ce que** le produit (5) extrudé en forme de barre est amené dans le fluide (9) de traitement thermique par une surface (11) ouverte sur l'environnement et est retiré du fluide par cette surface.

7. Dispositif selon l'une des revendications 4 à 6, **caractérisé en ce que** le bain (7) qui contient le fluide (9) de traitement thermique peut être chauffé.

8. Dispositif selon l'une des revendications 4 à 7, **caractérisé en ce que** le bain (7) qui contient le fluide (9) de traitement thermique est isolé thermiquement de l'environnement.

9. Dispositif selon l'une des revendications 4 à 8, **caractérisé en ce qu'**au moins un rouleau de renvoi (17) qui renvoie le produit extrudé (5) en forme de barre est logé dans le bain (7) qui contient le fluide (9) de traitement thermique.

10. Dispositif selon l'une des revendications 4 à 7, **caractérisé en ce que** le bain (7) qui contient le fluide (9) de traitement thermique présente une hauteur de l'ordre de 5 à 18 m.

11. Dispositif selon l'une des revendications 4 à 8, **caractérisé en ce que** le fluide (9) de traitement thermique est un sel fondu.
